# EUROPÄISCHE PATENTANMELDUNG

(11) **EP 0 847 126 A1**
(43) Veröffentlichungstag der Anmeldung: **10.06.1998**
(21) Anmeldenummer: 97117207.7
(22) Anmeldetag: 04.10.1997
(51) Int. Cl.: H02K 5/14, H02K 23/66, H02K 11/02, H01R 39/42

(54) **Kommutatormotor**

(30) Priorität: 04.12.1996 DE 19650224
(71) Anmelder: ROBERT BOSCH GMBH, 70442 Stuttgart (DE)
(72) Erfinder: Leitenberger, Thomas, 70565 Stuttgart (DE); Havenstein, Guillermo, 72764 Reutlingen (DE); Fernandes, Angelo, 71296 Heimsheim (DE); Hirschburger, Wolfgang, 72766 Reutlingen (DE)

(57) **Zusammenfassung**

Bei einem Kommutatormotor, insbesondere für Elektrohandwerkzeugmaschinen, mit Kommutator (13) und Kommutatorbürsten (14,15) und mit einem handbetätigten, elektrischen Leistungsschalter (22) zum Ein- und Ausschalten, weist zur Erzielung eines robusten, gegen Staub- und Korrosion unempfindlichen Ein-Aus-Schalters der Leistungsschalter (22) einen auf mindestens eine Kommutatorbürste (14,15) wirkenden Schaltmechanismus (24) auf, der die Kommutatorbürste (14,15) beim Einschalten auf den Kommutator (13) aufsetzt und beim Ausschalten vom Kommutator (13) abhebt.

## Beschreibung

### Stand der Technik

Die Erfindung betrifft einen Kommutatormotor, insbesondere für Elektrohandwerkzeugmaschinen, der im Oberbegriff des Anspruchs 1 definierten Gattung.

Bei einer bekannten Elektrohandwerkzeugmaschine (EP 0 503 868 B1) weist der handbetätigte, elektrische Leistungsschalter zum Ein- und Ausschalten des als Gleichstrom- oder Universalmotor ausgebildeten Kommutatormotors eine im Griffbereich des Maschinengehäuses angeordnete, mittels des Zeigefingers gegen die Kraft einer Rückstellfeder in das Gehäuse teilweise einschiebbare Schalttaste auf, die mit dem Kontaktbügel eines im Stromkreis des Kommutatormotors angeordneten, elektrischen Leistungsschalters verbunden ist. Wird die Schalttaste eingedrückt, so schließt der Schalter, wird sie freigegeben, so öffnet der Schalter, so daß der Kommutatormotor entsprechend ein- und ausgeschaltet wird.

Zur Umkehr der Drehrichtung des Kommutatormotors ist der die Kommutatorbürsten aufnehmende Bürstenhalter relativ zum Kommutator drehbar angeordnet und läßt sich mittels eines im Maschinengehäuse gelagerten Umschaltknopfes in zwei Schwenkendstellungen überführen. In jeder Schwenkendstellung werden zwei von mehreren im Stromkreis des Kommutatormotors angeordneten Kontakten jeweils so miteinander verbunden, daß sich die Stromrichtung in der Motorwicklung von der einen Schwenkendstellung des Bürstenhalters zur anderen Schwenkendstellung umkehrt.

### Vorteile der Erfindung

Der erfindungsgemäße Kommutatormotor mit den kennzeichnenden Merkmalen des Anspruchs 1 hat den Vorteil, daß die für die Kommutierung notwendigen Bauteile im Motor zusätzlich für die Funktion "Ein-Aus-Schalten" genutzt werden und damit die elektrischen Kontaktelemente im Leistungsschalter entfallen. Damit werden nicht nur Stück- und Montagekosten eingespart, sondern wird vor allem ein robuster, gegen Staub und Korrosion unempfindlicher Ein-Aus-Schalter geschaffen, dessen Anfälligkeit im Vergleich zu den bisher verwendeten Ein-Aus-Schaltern wesentlich reduziert ist. Wie Versuche gezeigt haben, beeinträchtigt die zusätzliche Schaltfunktion der Kommutatorbürsten nicht die Kommutierungsfunktion und verursacht auch keinen erhöhten Abrieb oder Verschleiß an Kommutator und Kommutatorbürsten.

Durch die in den weiteren Ansprüchen aufgeführten Maßnahmen sind vorteilhafte Weiterbildungen und Verbesserungen des im Anspruch 1 angegebenen Kommutatormotors möglich.

Eine konstruktiv einfache Realisierung des Leistungsschalters zur Ein-Aus-Schaltung wird erreicht, wenn gemäß einer bevorzugten Ausführungsform der Erfindung der Bürstenhalter mit einem zweiarmigen Schwenkhebel ausgestattet ist, an dessen einem Hebelarm der Schaltmechanismus zum Schwenken des Schwenkhebels angreift und an dessen anderem Hebelarm die Kommutatorbürste gehalten ist und eine die Kommutatorbürste auf den Kommutator aufpressende Bürstenandruckfeder angreift. Bevorzugt weist dabei der Schaltmechanismus eine axial verschieblich gehaltene Schaltstange auf, die mit ihrem einen Ende unter Wirkung einer Andruckfeder an dem einen Hebelarm des Schwenkhebels anliegt und an ihrem anderen Ende mit einem Bedienelement gekoppelt ist. Die die Schaltstange an den Hebelarm des Schwenkhebels andrückende Rückstellfeder ist so ausgelegt, daß bei unbetätigtem Bedienelement der Schwenkhebel gegen die Kraft der Bürstenandruckfeder in eine Schwenkendstellung zurückgestellt ist, in welcher die Kommutatorbürste vom Kommutator abgehoben ist.

Der Bürstenhalter wird bevorzugt als Kunststoffteil gefertigt und in der Ausführung mit zwei jeweils eine Kommutatorbürste tragenden Schwenkhebeln in einem Teil spritzgegossen, wobei die Schwenkachsen der Schwenkhebel vorteilhaft als Filmscharniere ausgeführt werden. Die Kontaktierung der Kommutatorbürsten erfolgt durch eingestampfte Litzen oder bei kleiner Stromübertragung durch Kontaktbügel.

Bei Kommutatormotoren mit einem Nennstrom von über 4 A ist es vorteilhaft, wenn gemäß einer weiteren Ausführungsform der Erfindung im Verstellweg von Schaltstange und/oder Bedienelement eine Schnappfunktion derart realisiert ist, daß bei Betätigen des Bedienelements die Freigabe des Schwenkhebels durch die Schaltstange stets schlagartig erfolgt. Dadurch setzen die Kommutatorbürsten schlagartig auf den Kommutator auf und Abbranderscheinungen infolge Lichtbogenbildung werden vermieden.

Gemäß einer vorteilhaften Ausführungsform der Erfindung sind zur Entstörung des Kommutatormotors die beiden Anschlußklemmen zum Anschließen des Kommutatormotors an ein Stromversorgungsnetz über einen Entstörkondensator miteinander verbunden. Dem Entstörkondensator ist ein Entladewiderstand parallel geschaltet, der verhindert, daß am gezogenen, mit den Anschlußklemmen verbundenen Netzstecker hohe Spannungen auftreten.

### Zeichnung

Die Erfindung ist anhand eines in der Zeichnung dargestellten Ausführungsbeispiels in der nachfolgenden Beschreibung näher erläutert. Es zeigen in schematischer Darstellung:
- Fig. 1 und 2: jeweils ausschnittweise einen zweipoligen Kommutatormotor im abgeschalteten Zustand (Fig. 1) bzw. im eingeschalteten Zustand (Fig. 2),
- Fig. 3: ein Schaltbild des Kommutatormotors in Fig. 1 und Fig. 2.

### Beschreibung des Ausführungsbeispiels

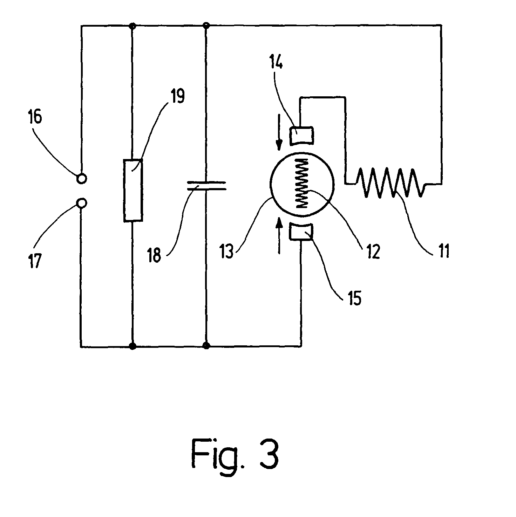

Der in Fig. 3 im Schaltbild dargestellte Kommutatormotor, der als Gleichstrommotor oder als Universalmotor ausgeführt sein kann und für den Einbau in eine Elektrohandwerkzeugmaschine bestimmt ist, weist in bekannter Weise einen Ständer oder Stator mit Statorwicklung 11 und einen Läufer oder Rotor mit Ankerwicklung 12 auf. Statorwicklung 11 und Ankerwicklung 12 sind in Fig. 3 schematisch angedeutet. Auf dem Rotor sitzt drehfest ein Kommutator 13, dessen Kommutatorlamellen mit der Ankerwicklung 12 elektrisch verbunden sind. Die zur Stromkommutierung auf dem Umfang des Kommutators 13 aufliegenden beiden Kommutatorbürsten sind mit 14 und 15 bezeichnet. Zum Anschließen des Kommutatormotors an ein Stromversorgungsnetz dienen zwei Anschlußklemmen 16,17, wobei die Anschlußklemme 16 über die Statorwicklung 11 mit der Kommutatorbürste 14 und die Anschlußklemme 17 mit der Kommutatorbürste 15 verbunden ist. Den beiden Anschlußklemmen 16,17 ist ein Entstörkondensator 18 und ein Entladewiderstand 19 parallelgeschaltet.

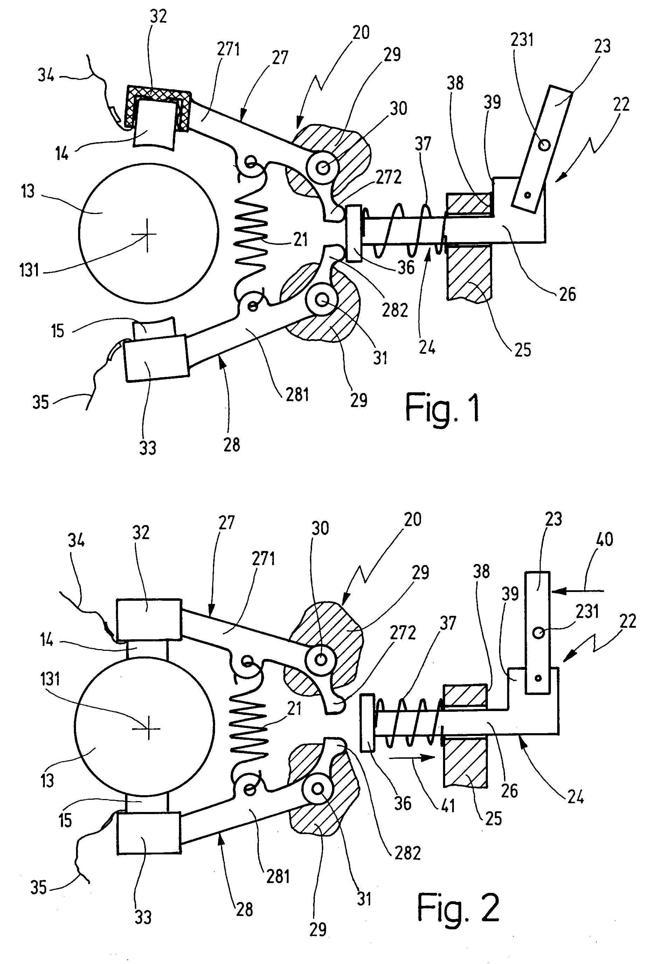

Die beiden diametral auf dem Kommutator 13 sitzenden Kommutatorbürsten 14,15 sind in einem Bürstenhalter 20 aufgenommen und werden von einer Bürstenandruckfeder 21 auf den Umfang des Kommutators 13 aufgepreßt. Zum Ein- und Ausschalten des Kommutatormotors ist ein Leistungsschalter 22 vorgesehen, der bei Einbau des Kommutatormotors in eine Elektrohandwerkzeugmaschine mit einem Bedienelement 23 im Griffbereich des Maschinengehäuses 25 angeordnet ist. Das Bedienelement 23 ist Teil eines Schaltmechanismus 24, der auf den Bürstenhalter 20 einwirkt und mindestens eine Kommutatorbürste 14,15 beim Einschalten auf den Kommutator 13 aufsetzt (Fig. 2) und beim Ausschalten vom Kommutator 13 abhebt (Fig. 1).

Im vorliegenden Ausführungsbeispiel weist der Schaltmechanismus 24 eine im Maschinengehäuse, das mit 25 nur angedeutet ist, axial verschieblich gehaltene Schaltstange 26 auf. Das eine Ende der Schaltstange 26 ist mit dem schwenkbar im Maschinengehäuse 25 gehaltenen Bedienelement 23 gekoppelt und das andere Ende der Schaltstange 26 wirkt auf den Bürstenhalter 20 ein. Der Bürstenhalter 20 weist zwei bezüglich der Schaltstangenachse achssymmetrisch angeordnete, identisch ausgebildete zweiarmige Schwenkhebel 27,28 auf, die auf einer Halteplatte 29 schwenkbar befestigt sind. Die Halteplatte 29 ist im Maschinengehäuse 25 festgelegt, und die Schwenkachsen 30,31 der Schwenkhebel 27,28 sind parallel zur Achse 131 des Kommutators 13 ausgerichtet. Der Bürstenhalter 20 wird bevorzugt als einstückiges Kunststoffspritzgußteil hergestellt, wobei die Schwenkachsen 30,31 der Schwenkhebel 27,28 als Filmscharniere ausgeführt werden. Jeder Schwenkhebel 27,28 trägt am Ende seines einen Hebelarms 271 bzw. 281 einen Bürstenköcher 32 bzw. 33, in dem die Kommutatorbürste 14 bzw. 15 aufgenommen ist. Der Stromanschluß erfolgt über eine eingestampfte Stromlitze 34 bzw. 35. Bei kleiner Stromübertragung können die Litzen 34,35 durch Kontaktbügel ersetzt werden. Der andere Hebelarm 272 bzw. 282 der Schwenkhebel 27,28 ist gegenüber dem ersten Hebelarm 271 bzw. 281 abgewinkelt und ragt mit seinem Ende in den Verschiebeweg der Schaltstange 26, die endseitig eine Andruckplatte 36 zum Anlegen an die ballig ausgebildeten Enden der beiden Hebelarme 272 und 282 trägt. Bei unbetätigtem Bedienelement 23 wird die Andruckplatte 36 unter der Wirkung einer als Schraubendruckfeder ausgeführten Rückstellfeder 37, die sich einerseits an der Andruckplatte 36 und andererseits am Maschinengehäuse 25 abstützt, gegen die beiden Hebelarme 272 und 282 der Schwenkhebel 27,28 gedrückt, wobei ein im Verschiebeweg der Schaltstange 26 angeordneter Anschlag 38 an einem an der Schaltstange 26 angeordneten Gegenanschlag 39 anliegt und damit den Verschiebeweg der Schaltstange 26 begrenzt.

Die als Schraubenfeder ausgebildete Bürstenandruckfeder 21 ist mit ihren beiden Federenden in die Hebelarme 271 und 281 der beiden Schwenkhebel 27,28 eingehängt. Die Federkräfte von Bürstenandruckfeder 21 und Rückstellfeder 37 sind so aufeinander abgestimmt, daß die Rückstellfeder 37 die beiden Schwenkhebel 27,28 gegen die Kraft der Bürstenandruckfeder 21 zu verschwenken vermag. Mit Verschwenken der Schwenkhebel 27,28 heben die an den Hebelarmen 271 und 281 gehaltenen Kommutatorbürsten 14,15 vom Kommutator 13 ab. Der am Maschinengehäuse 25 festgelegte Anschlag 38 ist im Verschiebeweg der Schaltstange 26 so angeordnet, daß beim Anliegen des Gegenanschlags 39 an dem Anschlag 38 die beiden Schwenkhebel 27,28 eine Schwenkendstellung einnehmen, in welcher die beiden Kommutatorbürsten 14,15 vom Kommutator 13 abgehoben sind (Fig. 1). Da damit die Stromverbindung zu der Ankerwicklung 12 unterbrochen ist, ist der Kommutatormotor abgeschaltet, und der Leistungsschalter 22 nimmt seine "Aus"-Stellung ein, in welcher das Bedienelement 23 im Griffbereich des Maschinengehäuses 25 der Elektrohandwerkzeugmaschine etwas vorsteht (Fig. 1). Wird nunmehr auf das Bedienelement 23 eine in Richtung Pfeil 40 in Fig. 1 wirkende Kraft, z.B. durch den Zeigefinger des Benutzers, aufgebracht, so wird das Bedienelement 23 um seine Schwenkachse 231 in Fig. 1 entgegen Uhrzeigersinn geschwenkt. Dadurch wird die Schaltstange 26 gegen die Kraft der Rückstellfeder 27 in Richtung Pfeil 41 in Fig. 2 verschoben. Die Andruckplatte 36 hebt von den Hebelarmen 272 und 282 ab, und die Bürstenandruckfeder 21 schwenkt die beiden Schwenkhebel 27,28 in Richtung Kommutator 13 und preßt die Kommutatorbürsten 14,15 auf die Kommutatorlamellen am Umfang des Kommutators 13 auf. Wie hier nicht weiter dargestellt ist, ist im Verschiebeweg der Schaltstange 26 oder im Schwenkweg des Bedienelements 23 eine Schnappfunktion integriert, so daß das Freigeben der Schwenkhebel 27,28 beim Eindrücken des Bedienelements 23, nicht kontinuierlich mit dem Schwenkweg des Bedienelements 23 sondern schlagartig nach einer vorgebbaren Verschwenkung des Bedienelements 23 erfolgt. Wird das Bedienelement 23 wieder freigegeben, so schiebt die Rückstellfeder 37 die Schaltstange 26 wieder soweit zurück, bis Anschlag 38 und Gegenanschlag 39 wieder aneinander anliegen und die beiden Schwenkhebel 27,28 in ihre vom Kommutator 13 abgehobenen Schwenkendstellung überführt sind.

Die Erfindung ist nicht auf das beschriebene Ausführungsbeispiel beschränkt. So genügt es, den Bürstenhalter mit nur einem Schwenkhebel auszustatten, der in der beschriebenen Weise ausgebildet ist und über den Leistungsschalter die Kohlebürste vom Kommutator abhebt bzw. auf den Kommutator aufsetzt. Die andere Bürste kann dabei ständig an den Kommutator angedrückt bleiben.

Auf die Integration der Schnappfunktion im Verschiebeweg der Schaltstange und/oder im Schwenkweg des Bedienelements kann bei Kommutatormotoren mit einem Nennstrom kleiner 4A verzichtet werden.

## Patentansprüche

1. Kommutatormotor, insbesondere für Elektrohandwerkzeugmaschinen, mit einem Kommutator (13) und Kommutatorbürsten (14,15) und mit einem handbetätigten, elektrischen Leistungsschalter (22) zum Ein- und Ausschalten des Motors,dadurch gekennzeichnet, daß der Leistungsschalter (22) einen auf mindestens eine Kommutatorbürste (14,15) wirkenden Schaltmechanismus (24) aufweist, der die Kommutatorbürste (14,15) beim Einschalten auf den Kommutator (13) aufsetzt und beim Ausschalten vom Kommutator (13) abhebt.

2. Motor nach Anspruch 1, dadurch gekennzeichnet, daß die Kommutatorbürste (14,15) in einem Bürstenhalter (20) aufgenommen ist und der Schaltmechanismus (24) am Bürstenhalter (20) angreift.

3. Motor nach Anspruch 2, dadurch gekennzeichnet, daß der Bürstenhalter (20) mindestens einen zweiarmigen Schwenkhebel (27,28) aufweist, an dessen einem Hebelarm (272,282) der Schaltmechanismus (24) zum Schwenken des Schwenkhebels (27,28) angreift und an dessen anderem Hebelarm (271,281) die Kommutatorbürste (14,15) gehalten ist und eine die Kommutatorbürste (14,15) auf den Kommutator (13) aufpressende Bürstenandruckfeder (21) angreift.

4. Motor nach Anspruch 3, dadurch gekennzeichnet, daß der Schaltmechanismus (24) eine axial verschieblich gehaltene Schaltstange (26) und eine die Schaltstange (26) rückstellende Rückstellfeder (37) aufweist, daß die Schaltstange (26) mit ihrem einen Ende unter der Wirkung der Rückstellfeder (37) an dem einen Hebelarm (272,282) des mindestens einen Schwenkhebels (27,28) anliegt und an ihrem anderen Ende mit einem Bedienelement (23) gekoppelt ist und daß das am Schwenkhebel (27,28) wirksame Moment der Federkraft der Rückstellfeder (37) größer bemessen ist als das der Federkraft der Bürstenandruckfeder (21).

5. Motor nach Anspruch 4, dadurch gekennzeichnet, daß im Verschiebeweg der Schiebestange (26) ein Anschlag (38) angeordnet ist, der mit einem an der Schaltstange (26) angeordneten Gegenanschlag (39) zur Begrenzung des von der Rückstellfeder (37) bewirkten Verschiebewegs der Schaltstange (26) zusammenwirkt, und daß durch Anschlag (38) und Gegenanschlag (39) das Verschiebewegende so festgelegt ist, daß der die Kommutatorbürste (14,15) tragende Hebelarm (271,281) des mindestens einen Schwenkhebels (27,28) vom Kommutator (13) abgeschwenkt ist.

6. Motor nach einem der Ansprüche 4 oder 5, dadurch gekennzeichnet, daß der Bürstenhalter (20) zwei bezüglich der Achse der Schaltstange (26) achssymmetrisch angeordnete Schwenkhebel (27,28) mit je einer Kommutatorbürste (14,15) aufweist und daß die Schaltstange (26) mit einer endseitig angeordneten Andruckplatte (36) an dem einen Hebelarm (272,282) beider Schwenkhebel (27,28) anliegt.

7. Motor nach Anspruch 6, dadurch gekennzeichnet, daß die Bürstenandruckfeder (21) als Schraubenfeder ausgebildet ist, die mit ihren beiden Federenden in je einem der Schwenkhebel (27,28) eingehängt ist.

8. Motor nach einem der Ansprüche 1 - 7 mit zwei Anschlußklemmen (16,17) zum Anschließen an ein Stromversorgungsnetz und mit einem Entstörkondensator (18), dadurch gekennzeichnet, daß der Entstörkondensator (18) an den beiden Anschlußklemmen (16,17) angeschlossen und dem Entstörkondensator (18) ein Entladewiderstand (19) parallelgeschaltet ist.
